# EUROPEAN PATENT APPLICATION

(11) **EP 4 852 376 A1**
(43) Date of publication of application: **09.12.2026**
(21) Application number: 25181140.2
(22) Date of filing: 05.06.2025
(51) Int. Cl.: H04L 12/40

(54) **SPLITTER DEVICE WITH INTEGRATED IMPEDANCE TERMINATION**

(71) Applicant: TE Connectivity Solutions GmbH, 8200 Schaffhausen (CH)
(72) Inventor: DE BRUIJN, Jeroen Jozef Maria, 8200 Schaffhausen (CH); van Gils, Wijnand, 8200 Schaffhausen (CH)
(74) Representative: Patentanwaltskanzlei WILHELM & BECK

(57) **Abstract**

The invention relates to a splitter device (100) with integrated impedance termination for a data bus (201), in particular for a multidrop network, comprising a first port (101), a second port (103), a third port (105) and an impedance termination arrangement (107) comprising a termination resistor (109) and an actuation mechanism (111), wherein the first port (101) is arranged for a connection of an upstream cable (203) of the date bus, wherein the second port (103) is arranged to contact a downstream cable (205) of the data bus (201), wherein the third port (105) is arranged to contact a data bus device (207), wherein the termination resistor (109) is electrically connected to the first port (101) and/or third port (105), wherein in a first connection state the termination resistor is connected to the first port (101) and/or third port (105) and an electric connection between the first port (101) and the third port (105) is established via the termination resistor (109), wherein in a second connection state the termination resistor (109) is disconnected from the first port (101) and/or the third port (105) and an electric connection between the first port (101) and the second port (105) is established,, wherein the actuation mechanism (111) is arranged to switch the splitter device into the second connection state and electrically disconnect the termination resistor (109) to the first port (101) and/or third port (105) when the actuation mechanism (111) is activated, and wherein the actuation mechanism (111) is arranged to be activated by a cable connected to the second port (103).

## Description

The invention relates to a splitter device with integrated impedance termination for a data bus, in particular a multidrop network.

Splitter devices for multidrop networks are known from state of the art.

An objective of the current invention is to provide an improved splitter device with integrated impedance termination, an improved splitter device system and an improved method for assembling a splitter device system.

The objective is solved by the splitter device, the system and the method of the independent claims. Embodiments are subject of the dependent claims.

According to an aspect a splitter device with integrated impedance termination for a data bus, in particular for a multidrop network is provided, comprising a first port, a second port, a third port and an impedance termination arrangement comprising a termination resistor and an actuation mechanism, wherein the first port is arranged for a connection of an upstream cable of the data bus, wherein the second port is arranged for a connection of a downstream cable of the data bus, wherein the third port is arranged for a connection of a data bus device, wherein in a first connection state the termination resistor is connected to the first port and/or third port and an electric connection between the first port and the third port is established via the termination resistor, wherein in a second connection state the termination resistor is disconnected from the first port and/or the third port and an electric connection between the first port and the second port is established,, wherein the actuation mechanism is arranged to switch the splitter device from the first connection state into the second connection state and to electrically disconnect the termination resistor from the first port and/or third port when the actuation mechanism is activated, and wherein the actuation mechanism is arranged to be activated by a downstream cable connected to the second port.

This can achieve the technical advantage, that an improved splitter device with integrated impedance termination for a data bus, in particular for a multidrop network, can be provided.

For this, the splitter device comprises at least three ports for connecting an upstream cable and a downstream cable of the data bus and at least one data bus device. The splitter device further comprises an impedance termination arrangement with at least one termination resistor and an actuation mechanism.

In a first connection state of the splitter device, the termination resistor is electrically connected to the first port and/or third port, wherein the first port is arranged to electrically connect the upstream cable and the third port is arranged to connect the data bus device. With the termination resistor electrically connected to said port, the splitter device in the first connection state provides the impedance termination of the data bus.

The first connection state is defined as the state in which no outgoing cable of the data bus is connected to the second port of the splitter device. If the splitter device in the first connection state is connected to the data bus via an upstream cable connected to the first port but no downstream cable connected to the second port, the splitter device consequently is the last splitter device in the respective branch of the data bus.

With the termination resistor connected to said ports of the splitter device the termination resistor leads to the impedance termination of this particular branch of the data bus.

With the actuation mechanism of the impedance termination arrangement, however, an automatic disconnection of the termination resistor to said ports of the splitter device can be performed. As soon as a downstream cable of the data bus is inserted into and connected to the second port of the splitter device, the actuation mechanism is activated and switches the splitter device from the first connection state into a second connection state. In the second connection state the termination resistor is disconnected from the first port and/or the third port and an electric connection between the first port and the second port is established.

For this, the actuation mechanism is arranged to be activated once the downstream cable of the data bus is connected to the second port of the splitter device. The activated actuation mechanism is arranged to switch the splitter device from the first connection state to the second connection state and to electrically disconnect the termination resistor from the ports of the splitter device.

Thus, when the downstream cable of the data bus is connected to the second port, which means that the respective splitter device is not the last splitter device in the respective branch of the data bus, no impedance termination is achieved by the splitter device.

Due to the actuation mechanism a user connecting the splitter device with the downstream cable does not additionally have to disconnect the termination resistor.

In addition to this, since the termination resistor is connected to the ports of the splitter device in an idle state of the splitter device, no downstream cable is introduced to the second port, the user performing the connection of the splitter device to the data bus also does not have to additionally activate the impedance termination.

As a result, the splitter device according to the invention allows for a faster assembly process of the multidrop network. Further, since the connection and/or disconnection of the termination resistor to the ports of the splitter device, the splitter device reliably provides an impedance termination when needed, or avoids the impedance termination when not needed. This allows for a proper impedance termination to the respective multidrop network.

In the sense of the current application, the upstream cable and the downstream cable both are standard data bus cables. The terms upstream and downstream only define, whether the respective cable is connected to the first port or the second port of the respective splitter device.

According to an embodiment the actuation mechanism is arranged to switch the splitter device from the second connection state to the first connection state and to electrically connect the termination resistor to the first port and/or third port when deactivated, and wherein the actuation mechanism is arranged to be deactivated by the downstream cable being removed from the second port.

This can achieve the technical advantage, that the actuation mechanism automatically resets the splitter device from the second connection state to the first connection state, once the downstream cable is removed from the second port. As the actuation mechanism automatically reconnects the termination resistor to the ports of the splitter device once the downstream cable is removed from the second port, no additional reactivation of the impedance termination has to be conducted via a respective user.

According to an embodiment the termination resistor is electrically connected to the first port and/or third port by means of a connection member, and wherein the electrical connection is a detachable connection.

This can achieve the technical advantage, that a reliable electrical connection between the termination resistor and a cable between the second port and the first and/or between the second port and the third port or between the termination resistor and at least one contact of the second port can be achieved.

Since the electrical connection is a detachable connection, depending on whether the downstream cable is connected to the second port, the actuation mechanism is arranged to connect or disconnect the termination resistor to the ports of the splitter device and thereby activate or deactivate the impedance termination.

This allows for a smooth connection and/or disconnection of the termination resistor between the ports of the splitter device.

According to an embodiment the actuation mechanism comprises a spring member, wherein when the actuation mechanism is deactivated the spring member maintains the electrical connection of the termination resistor to the first port and/or third port, and/or wherein when the actuation mechanism is activated the spring member is arranged to disconnect the termination resistor from the first port and/or third port.

This can achieve the technical advantage, that by means of the spring element an easy to manufacture and reliable actuation mechanism arranged to connect or disconnect the termination resistor to the ports of the splitter device can be provided.

Depending on whether the actuation mechanism is activated or deactivated, i.e. whether the downstream cable is introduced to the second port or removed from the second port, the spring element is arranged to either maintain the electrical connection between the termination resistor and ports of the splitter device or to disconnect the termination resistor from the ports.

Due to the restoring force of the spring element, the spring element automatically reconnects the termination resistor to the ports once the actuation mechanism is deactivated, i.e. once the downstream cable is removed from the second port.

According to an embodiment the actuation mechanism comprises an actuation member located in an accommodation space of the second port and mechanically connected to the spring member, wherein when the actuation mechanism is activated by the downstream cable connected to the second port and inserted into the accommodation space the actuation member is arranged to drive the spring member to disconnect the electrical connection of the termination resistor from the first port and/or third port.

This can achieve the technical advantage, that with the actuation member located in the accommodation space of the second port, arranged to accommodate the downstream cable, a reliable actuation of the spring element to disconnect the termination resistor from the ports once the downstream cable is inserted into the accommodation space of the second port can be provided.

This allows for an easy to manufacture and reliable solution of an actuation mechanism that is arranged to disconnect the termination resistor from the ports of the splitter device when the downstream cable is connected to the second port, and to reconnect the termination resistor to the ports when the downstream cable is removed from the second port.

According to an embodiment the connection member of the termination resistor is formed by the spring member, wherein a first end of the spring member is electrically connected to the termination resistor and a second end of the spring member is arranged to be electrically connected to and/or disconnected from the first port and/or third port.

This can achieve the technical advantage, that a further simplification of the actuation mechanism can be provided. In this embodiment the spring member serves as the connection member connecting the termination resistor to the ports of the splitter device. As a result, the number of parts needed to assemble the actuation mechanism can be reduced.

According to an embodiment contacts of the second port are designed as IDC contacts.

This can achieve the technical advantage, that an easy and reliable way to contact the upstream cable and/or downstream cable to the first and/or second ports of the splitter device can be provided.

According to an embodiment the splitter device comprises a housing with a first housing part and a second housing part, wherein in the second housing part the contacts of the second port and the impedance termination arrangement are arranged, wherein the first housing part and/or the second housing part define the accommodation space of the second port, and wherein by joining the first and second housing parts the IDC contacting of the downstream cable placed in the accommodation space of the second port is realizable and the actuation mechanism is activatable.

This can achieve the technical advantage, that an easy way to contact the splitter device to the upstream and/or downstream cables of the data bus can be provided. In addition to this, an easy way to activate the actuation mechanism to disconnect the termination resistor between the ports of the splitter device can be provided.

According to an embodiment the splitter device further comprises a dust cap covering an insertion opening of the second port.

This can achieve the technical advantage, that with the dust cap a protection of the inside of the splitter device can be provided, when the splitter device is in the idle state, i.e. when no downstream cable is connected to the second port.

According to an embodiment the dust cap is connected to the actuation mechanism, and wherein the actuation mechanism is arranged to cover the insertion opening with the dust cap when the actuation mechanism is deactivated.

This can achieve the technical advantage, that due to the connection of the dust cap to the actuation mechanism a removal of the dust cap from the insertion opening of the second port can be achieved automatically, when the downstream cable is connected to the second port.

The actuation mechanism can also be arranged to relocate the dust cap onto the insertion opening of the second port, when the downstream cable is removed from the second port. This further simplifies the assembly process of the multidrop network.

According to an embodiment the first and second ports each comprise two contacts arranged to contact two conductors of the upstream cable and/or the downstream cable.

This can achieve the technical advantage, that due to the two contacts for each of the first and second ports, the splitter device can be used for the data bus cables comprising two conductors. For example, the splitter device can be used for a SPE multidrop network standardized according to the 10BASE -T1S standard or the 10BASE-T1M standard.

According to an embodiment the termination resistor is a 100 Ohm resistor.

This can achieve the technical advantage, that with the respective termination resistor a sufficient impedance termination of the data bus can be provided.

According to an embodiment the actuation mechanism comprises a sensor element arranged to detect the downstream cable inserted into the second port, and wherein the actuation mechanism is arranged to connect or disconnect the termination resistor to and from the first port and/or third port based on sensor data of the sensor element.

This can achieve the technical advantage, that due to the sensor element a precise detection whether the downstream cable is connected to the second port or not can be achieved. Based on this detection results the actuation mechanism can precisely connect or disconnect the termination resistor to or from the ports of the splitter device.

As a result, the impedance termination can precisely be provided when needed, i.e. when no downstream cable is connected to the second port, or can be terminated, when not needed, i.e. when the downstream cable is connected to the second port.

According to an aspect a splitter device system with a splitter device with integrated impedance termination according to any of the preceding embodiments is provided, wherein an downstream cable of a data bus is connected to the second port of the splitter device, wherein by the downstream cable being connected to the second port the actuation mechanism of the impedance termination arrangement is activated, and wherein by means of the activated actuation mechanism the termination resistor of the impedance termination arrangement is electrically disconnected from the first port and/or third port of the splitter device.

This can achieve the technical advantage, that an improved splitter device system can be provided.

According to an aspect a method of assembling a splitter device system is provided, comprising:
Providing a splitter device with integrated impedance termination according to any of the preceding embodiments; and
Connecting a downstream cable of a data bus to the second port of the splitter device, and by connecting the downstream cable to the second port activating the actuation mechanism of the impedance termination arrangement, switching the splitter device from the first connection state to the second connection state and disconnecting the termination resistor from the first port and/or third port by means of the activated actuation mechanism.

This can achieve the technical advantage, that an improved method for assembling a splitter device system can be provided.

The invention is described with respect to the figures. In the figures it is illustrated in:
- Figure 1: a schematic illustration of a splitter device system with a splitter device according to an embodiment,
- Figure 2: a schematic illustration of a splitter device according to an embodiment,
- Figure 3: another schematic illustration of a splitter device according to another embodiment, and
- Figure 4: another schematic illustration of a splitter device according to another embodiment.

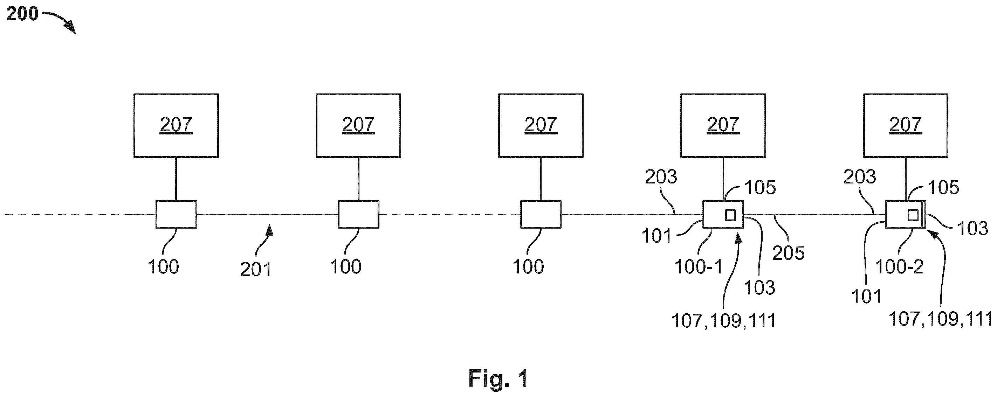

Figure 1 shows a schematic illustration of a splitter device system 200 with a splitter device 100 according to an embodiment.

Figure 1 shows a multidrop network comprising a data bus 201 and multiple data bus devices 207 connected to the data bus 201 via multiple splitter devices 100. The network of figure 1 comprises a first splitter device 100-1 and a second splitter device 100-2. Both splitter devices 100-1, 100-2 are designed according to the current invention and comprise a first port 101, a second port 103, a third port 105 and an impedance termination arrangement 107 comprising a termination resistor 109 and an actuation mechanism 111.

In the shown embodiment the first splitter device 100-1 is connected to an upstream cable 203 of the data bus 201 via the first port 101, to a downstream cable 205 of the data bus 201 via the second port 103 and to a data bus device 207 via the third port 105. Since that downstream cable 205 of the data bus 201 is connected to the second port 103 of the first splitter device 100-1 the splitter device 100-1 is switched to a second connection state and the impedance termination is disabled.

This is automatically achieved by the actuation mechanism 111, which automatically switches the splitter device from a first connection state, in which the termination resistor 109 is electrically connected to the first port 101 and/or the third port 105 and an electric connection between the first port 101 and the third port 105 via the termination resistor 109 is established, to the second connection state and electrically disconnects the termination resistor 109 from the first port (101) and/or the third port (105). In the second connection state an electrical connection between the first port 101 and the second port 103 is established.

In the shown embodiment, the second splitter device 100-2 is connected to an upstream cable 203 of the data bus 201 via the first port 101 and to a data bus device 207 via the third port 105. As in the shown example, the second splitter device 100-2 is the last splitter device in the shown branch of the data bus 201 no downstream cable 205 is connected to the second port 103 of the splitter device 100-2. Hence, the second splitter device 100-2 is in the first connection state.

As a result, the impedance termination is activated and the respective termination resistor 109 is electrically connected to the first port 101 and/or the third port 105 and the first port 101.

This way, the second splitter device 100-2 provides the impedance termination of the shown branch of the data bus 201 via the integrated impedance termination including the termination resistor 109.

According to the invention the actuation mechanism 111 of the impedance termination arrangement 107 of the shown splitter devices 100-1, 100-2 is arranged to automatically switch the splitter device from the first connection state to the second connection state and to disconnect the termination resistor 109 from the first port 101 and/or the third port 105, when the downstream cable 205 is connected to the second port 103 of the respective splitter device.

If no downstream cable 205 is connected to the second port 103, the splitter device 100 is in the first connection state and the termination resistor 109 is electrically connected to the first port 101 and/or the third port 105. The first connection state is a default setting of the splitter device 100.

According to an embodiment, the actuation mechanism 111 is also arranged, to switch the splitter device 100 from the second connection state back to the first connection state and to reconnect the termination resistor 109 to the first port 101 and/or the third port 105, when the downstream cable 205 of the data bus 201 is removed and disconnected from the second port 103.

Thus, the splitter device 100 according to the current invention in the first connection state, meaning when no downstream cable 205 is connected to the second port 103, provides the impedance termination by means of the termination resistor 109 electrically connected to the first port 101 and/or the third port 105.

When a downstream cable 205 of the data bus 201 is connected to the second port 103 the actuation mechanism 111 automatically switches the splitter device 100 from the first connection state to the second connection state and disconnects the termination resistor 109 from the first port 101 and/or the third port 105, establishes an electric connection between the first pot 101 and the second port 103 and by this disables impedance termination.

According to an embodiment, the termination resistor 109 is designed as a 100 Ohm resistor.

According to an embodiment, the multidrop network can be designed as a SPE multidrop network, in particular standardized according to the 10BASE-T1S and/or 10BASE-T1M standard.

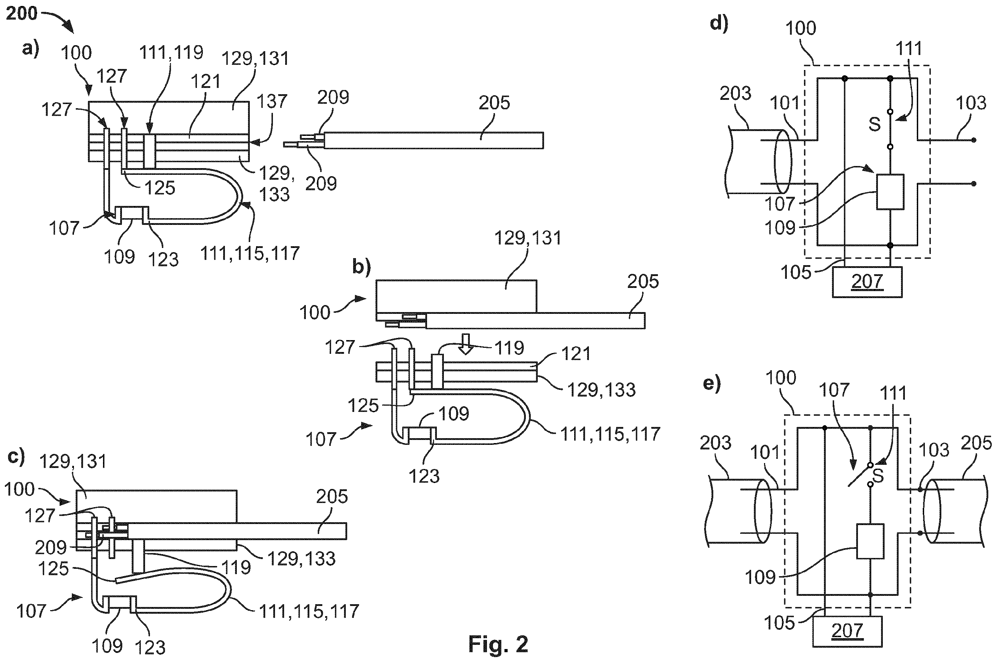

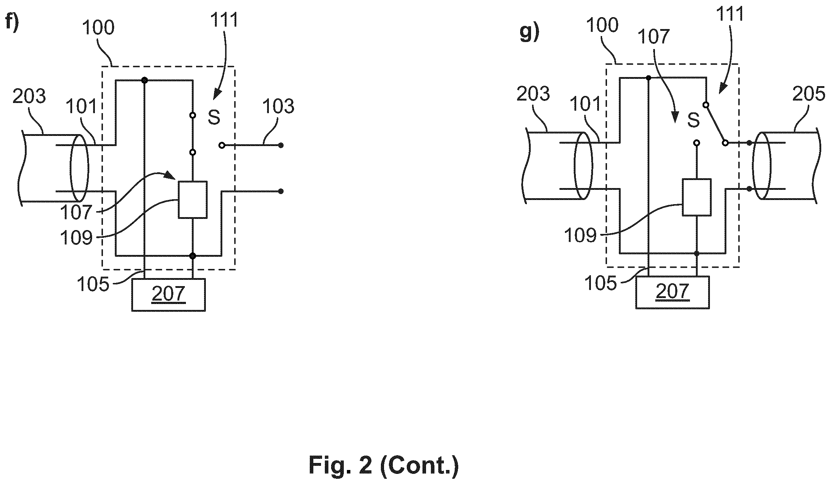

Figure 2 shows a schematic illustration of a splitter device 100 according to an embodiment.

The graphics a) to c) of figure 2 show schematic sectional views of a splitter device 100 according to the current invention and are used to illustrate the working mechanism of the impedance termination arrangement 107 of the splitter device 100.

In order to simplify the figure, in graphics a) to c) the illustrated splitter device 100 is substantially simplified. In particular in graphics a) to c) only the part of the splitter device 100 comprising the second port 103 is illustrated. This shall not restrict the current invention.

Graphics d) to g) show circuit diagrams illustrating the respective states of the splitter device 100 shown in graphics a) and c). The circuit diagrams of graphics d) and f) therefore correspond to the first connection state of the splitter device 100 shown in graphic a). The circuit diagrams illustrated in graphics e) and g) correspond to the second connection state of the splitter device 100 shown in graphic c).

The graphics d), e) and f), g) show two different embodiments of the current invention.

Graphic a) shows the splitter device 100 in the first connection state, in which no downstream cable 205 of the data bus 201 is connected to the second port 103. As a result, the termination resistor 109 is connected to the first port 101 and/or the third port 105. In graphic a) the termination resistor 109 is further connected to contacts 127 of the second port 103. The connection to the first port 101 and/or the third port 105 is not shown.

According to a different embodiment, the termination resistor 109 can also be electrically connected to a cable 113 connecting the second port 103 to the first port 101 and/or the second port 103 to the third port 105.

In the shown embodiment, the first and second ports 101, 103 of the splitter device 100 each comprise two contacts 127. As a result, the splitter device 100 in the shown embodiment is arranged to connect to data cables of the data bus 201 comprising two conductors 209.

In the shown embodiment the termination resistor 109 is connected to the second port 103 via a connection member 115. The connection member 115 is connected to the contacts 127 of the second port 103 via a detachable electrical connection.

In the shown embodiment the actuation mechanism 111 comprises a spring element 117. The spring element 117 is arranged to maintain the electrical connection of the termination resistor 109 to the second port 103, or to the first port 101 and/or the third port 105.

The spring element 117 is further arranged to disconnect the termination resistor 109 from the second port 103, or from the first port 101 and/or the third port 105 when the downstream cable 205 is connected to the second port 103.

In the shown embodiment, the connection member 115 is formed as the spring element 117. Therefore, the spring element 117 is electrically connected to the termination resistor 109 via a first end 123 and is detachable connected to the contacts 127 via a second end 125 of the spring element 117.

In the shown embodiments the actuation mechanism 111 further comprises an actuation member 119. The actuation member 119 is arranged movably in an accommodation space 121 of the second port 103. The accommodation space 121 is arranged to accommodate the downstream cable 205 in order to connect the downstream cable 205 to the second port 103.

The actuation member 119 is mechanically connected to the spring element 117 and is arranged to drive the spring element 117 to disconnect from the contacts 127, when the downstream cable 205 is contacted to the second port 103.

As mentioned above, graphic a) shows the first connection state of the splitter device 100, in which no downstream cable 205 is connected to the second port 103 and therefore in which the impedance termination is activated by means of the termination resistor 109 electrically connected to the second port 103, or to the first port 101and/or the third port 105.

In graphic d), the circuit diagram shows the splitter device 100 with the first port 101, the second port 103, the third port 105 and the impedance termination arrangement 107 comprising the termination resistor 109 and the actuation mechanism 111.

In the shown embodiment the upstream cable 203 of the data bus 201 is connected to the first port 101 and a data bus device 207 is connected to the third port 105. However, corresponding to graphic a) no downstream cable 205 is connected to the second port 103.

As a result, the impedance termination is activated by means of the termination resistor 109 electrically connected to the second port 103, or to the first port 101 and/or the third port 105. In the circuit diagram, the actuation mechanism 111 is illustrated by means of a switch S.

In the deactivated state of the actuation mechanism 111, which corresponds to the activation of the impedance termination, the switch S is in a closed state and therefore provides the electric connection of the termination resistor 109 to the respective ports 101, 103, 105.

Regarding graphic b), in the shown embodiment the contacts 127 of the second port 103 are designed as IDC contacts. The illustrated housing 129 of the splitter device 100 in the shown embodiment comprises a first housing part 131 and a second housing part 133.

The first and second housing parts combined define the accommodation space 121 of the second port 103. In the shown embodiment, and as illustrated in graphic b), the second housing part 133 comprises the contacts 127 and the impedance termination arrangement 107.

In order to contact the downstream cable 205 of the data bus 201 to the splitter device 100, the first and second housing parts 131, 133 are separated from each other and the downstream cable 205 is introduced into the part of the accommodation space 121 of the first housing part 131.

In order to contact the downstream cable 205 to the second port 103, the first and second housing parts 131, 133 are joined, for example by pressing the first housing part 131 against the second housing part 133.

By joining the first and second housing parts 131, 133 the IDC connection of the downstream cable 205 is achieved, as the conductors 209 of the downstream cable 205 are pressed against the IDC contacts 127, which leads to a cutting of the conductor insulations and an electrical contacting of the conductor bodies of the conductors 209 by the IDC contacts 127.

In addition to the contacting of the conductors 209 to the contacts 127 the joining of the first and second housing parts 131, 133 also leads to a pushing motion of the actuation member 119 out of the accommodation space 121 by the downstream cable 205 positioned in the accommodation space 121 of the second port 103.

For this, the accommodation space 121 is mostly restricted to the dimensions of the downstream cable 205. As the downstream cable 205, therefore fills out the accommodation space 121, the actuation member 119 positioned movable inside the accommodation space 121 is pushed to the internal of the housing 129.

The movement of the actuation member 119 out of the accommodation space 121 leads to the actuation member 119 driving the spring element 117 to disconnect from the contact 127 of the second port 103. As a result, the termination resistor 109 is electrically disconnected from the second port 103 and/or from the first port 101 and/or the third port 105.

This results in a disabling of the impedance termination. This state is illustrated in graphic c). The connection of the downstream cable 205 to the second port 103 leads to an activation of the actuation mechanism 111.

The activation of the actuation mechanism 111 leads to a termination of the impedance termination by means of an electrical disconnection of the termination resistor 109 from the second port 103 and/or from the first port 101 and/or the third port 105.

Graphics e) and g) show the circuit diagram corresponding to the state of the splitter device 100 illustrated in graphic c). Due to the connection of the downstream cable 205 to the second port 103 the switch as of the actuation mechanism 111 is opened with the result that the termination resistor 109 is electrically disconnected from the second port 103 and the first port 101 and/or from the second port 103 and the third port 105.

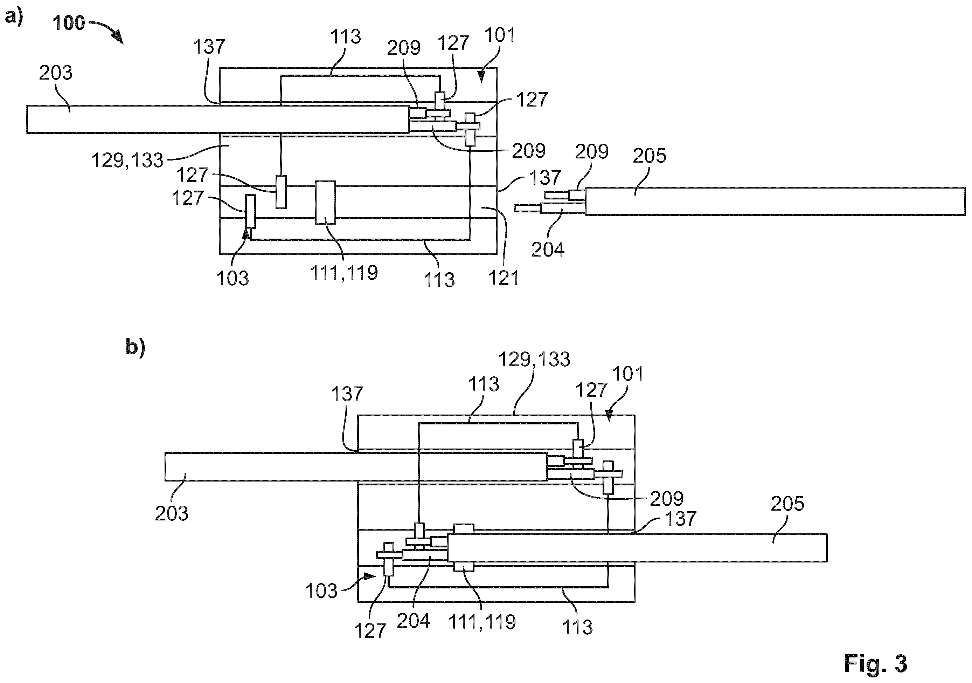

Figure 3 shows another schematic illustration of a splitter device 100 according to another embodiment.

Figure 3 shows a downward view of the splitter device 100 according to the embodiment of figure 2. In figure 3 also the first port 101 is illustrated. In graphic a) the upstream cable 203 is connected to the first port 101 and the downstream cable 205 is disconnected from the second port 103. As a result, the impedance termination is activated and the termination resistor 109 is electrically connected to the ports.

In graphic b) the downstream cable 205 is also connected to the second port 103 leading to an activation of the actuation mechanism 111 resulting in an electrical disconnection of the termination resistor 109 from the ports, as illustrated in figure 2.

In figure 3 also illustrated is a cable 113 connecting the first and second ports 101, 103.

Instead of the direct connection of the termination resistor 109 to the contacts 127 of the second port 103 the termination resistor 109 can also be electrically connected to the cable 113 between the first and second ports 101, 103 by means of the connection member.

In graphic c) only the second housing part 133 is illustrated in order to show the arrangement of the upstream and downstream cable 203, 205 in the respective accommodation spaces 121.

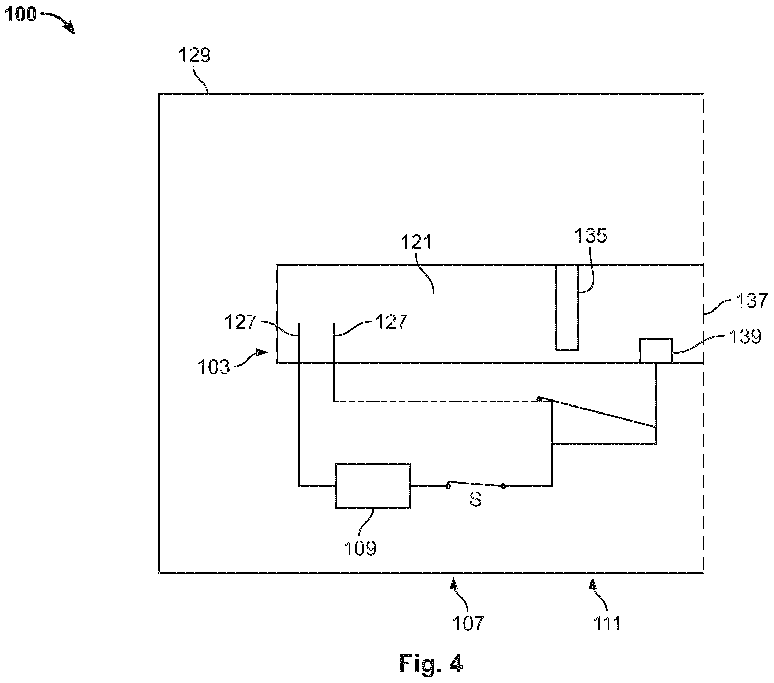

Figure 4 shows another schematic illustration of a splitter device 100 according to another embodiment.

In figure 4 again the illustration of the splitter device 100 is reduced to the second port 103. According to the previous embodiments, the termination resistor 109 is electrically connected to the contact 127 via the actuation mechanism 111.

In contrast to the previous embodiments, in the shown embodiments the impedance termination arrangement 107 further comprises a sensor element 139 positioned inside the accommodation space 121 of the second port 103.

In the shown embodiment the actuation mechanism 111 is arranged to disconnect or connect the termination resistor 109 between the second port 103 and the first port 101 and/or between the second port 103 and the third port 105 based on the sensor data provided by the sensor element 139.

The sensor element 139 is arranged to detect whether the downstream cable 205 is connected to the second port 103, i.e. whether the downstream cable 205 is inserted into the accommodation space 121.

In order to connect or disconnect the termination resistor 109 to or from the ports of the splitter device 100 based on the sensor data of the sensor element 139 the actuation mechanism 111 may further comprise electrical components arranged to provide the actuation or deactuation depending on the sensor data. These electrical components for example could comprise a microcontroller.

In the shown embodiments the splitter device 100 further comprises a dust cap 135 in order to cover the insertion opening 137 of the second port 103.

The dust cap 135 can be connected to the actuation mechanism 111, such that the actuation mechanism 111 is arranged to automatically remove the dust cap 135 from the insertion opening 137 when the downstream cable 205 is inserted into the accommodation space 121 and/or is connected to the second port 103.

The actuation mechanism 111 can also be arranged to reposition the dust cap 135 at the insertion opening 137 when the downstream cable 205 is removed from the second port 103.

The current invention is also applicable to splitter devices 100 comprising more than the illustrated first to third ports 101, 103, 105.

### List of reference numerals

- 100: splitter device
- 100-1: first splitter device
- 100-2: second splitter device
- 101: first port
- 103: second port
- 105: third port
- 107: impedance termination arrangement
- 109: termination resistor
- 111: actuation mechanism
- 113: cable
- 115: connection member
- 117: spring member
- 119: actuation member
- 121: accommodation space
- 123: first end
- 125: second end
- 127: contact
- 129: housing
- 131: first housing part
- 133: second housing part
- 135: dust cap
- 137: insertion opening
- 139: sensor element

- 200: system
- 201: data bus
- 203: upstream cable
- 205: downstream cable
- 207: data bus device
- 209: conductor

- NP: neutral position
- CP: contacting position
- IP: insertion position
- D: contacting direction
- A: distance
- L: longitudinal direction

## Claims

1. Splitter device (100) with integrated impedance termination for a data bus (201), in particular for a multidrop network, comprising a first port (101), a second port (103), a third port (105) and an impedance termination arrangement (107) comprising a termination resistor (109) and an actuation mechanism (111), wherein the first port (101) is arranged for a connection to an upstream cable (203) of the data bus, wherein the second port (103) is arranged to connect a downstream cable (205) of the data bus (201), wherein the third port (105) is arranged to connect a data bus device (207), wherein the termination resistor (109) is electrically connected to the first port (101) and/or the third port (105), wherein in a first connection state the termination resistor is connected to the first port (101) and/or third port (105) and an electric connection between the first port (101) and the third port (105) is established via the termination resistor (109), wherein in a second connection state the termination resistor (109) is disconnected from the first port (101) and/or the third port (105) and an electric connection between the first port (101) and the second port (105) is established, wherein the actuation mechanism (111) is arranged to switch the splitter device (100) from the first connection state to the second connection state by electrically disconnecting the termination resistor (109) from the first port (101) when the actuation mechanism (111) is activated, and wherein the actuation mechanism (111) is arranged to be activated by a cable connected to the second port (103).

2. Splitter device (100) according to claim 1, wherein the actuation mechanism (111) is arranged to switch the splitter device (100) from the second connection state into the first connection and to electrically connect the termination resistor (109) to the first port (101) and/or the third port (105)when deactivated, and wherein the actuation mechanism (111) is arranged to be deactivated by the cable being removed from the second port (103).

3. Splitter device (100) according to claim 1 or 2, wherein the termination resistor (109) is electrically connected to the first port (101) and/or third port (105) by means of a connection member (115), and wherein the electrical connection is a detachable connection.

4. Splitter device (100) according to any of the preceding claims, wherein the actuation mechanism (111) comprises a spring member (117), wherein when the actuation mechanism (111) is deactivated, the spring member (117) maintains the electrical connection of the termination resistor (109) to the first port (101) and/or the third port (105), and/or wherein when the actuation mechanism (111) is activated the spring member (117) is arranged to disconnect the resistor (109) from the first port (101) and/or the third port (105).

5. Splitter device (100) according to claim 4, wherein the actuation mechanism (111) comprises an actuation member (119) located in an accommodation space (121) of the second port (103) and mechanically connected to the spring member (117), wherein when the actuation mechanism (111) is activated by the downstream cable (205) connected to the second port (103), the actuation member (119) is arranged to drive the spring member (117) to disconnect the electrical connection of the termination resistor (109) from the first (101) and/or the third port (105).

6. Splitter device (100) according to any of the preceding claims 3 to 5, wherein the connection member (115) of the termination resistor (109) is formed by the spring member (117), wherein a first end (123) of the spring member (117) is electrically connected to the termination resistor (109) and a second end (125) of the spring member (117) is arranged to be electrically connected to and/or disconnected from the first port (101) and/or the third port (105).

7. Splitter device (100) according to any of the preceding claims, wherein contacts (127) of the second port (103) are designed as IDC contacts.

8. Splitter device (100) according to claim 7, wherein the splitter device (100) comprises a housing (129) with a first housing part (131) and a second housing part (133), wherein in the second housing part (133) the contacts (127) of the second port (103) and the impedance termination arrangement (107) are arranged, wherein the first housing part (131) and/or the second housing part (133) define the accommodation space (121) of the second port (103), and wherein by joining the first and the second housing parts (131, 133) the IDC contacting of the downstream cable (205) placed in the accommodation space (121) of the second port (103) is realizable and the actuation mechanism (111) is activatable.

9. Splitter device (100) according to any of the preceding claims, wherein the splitter device (100) further comprises a dust cap (135) covering an insertion opening (137) of the second port (103).

10. Splitter device (100) according to claim 9, wherein the dust cap is connected to the actuation mechanism (111), and wherein the actuation mechanism (111) is arranged to cover the insertion opening (137) with the dust cap (135) when the actuation mechanism (111) is deactivated.

11. Splitter device (100) according to any of the preceding claims, wherein the first and the second port (101, 103) each comprise two contacts (127) arranged to contact two conductors (209) of the upstream cable (203) and/or the downstream cable (205).

12. Splitter device (100) according to any of the preceding claims, wherein the termination resistor (109) is a 100 Ohm resistor.

13. Splitter device (100) according to any of the preceding claims, wherein the actuation mechanism (111) comprises a sensor element (139) arranged to detect the downstream cable (205) inserted into the second port (103), and wherein the actuation mechanism (111) is arranged to connected or disconnect the termination resistor (109) to and from the first port (101) and/or the third port (105) based on sensor data of the sensor element (139).

14. Splitter device system (200) with a splitter device (100) with integrated impedance termination according to any of the preceding claims 1 to 13, wherein a downstream cable (205) of a data bus (201) is connected to the second port (103) of the splitter device (100), wherein by the downstream cable (205) being connected to the second port (103) the actuation mechanism (111) of the impedance termination arrangement (107) is activated, and wherein by means of the activated actuation mechanism (111) the splitter device (100) is switched to the second connection state and the termination resistor (109) of the impedance termination arrangement (107) is electrically disconnected from the first port (101) and/or the third port (105) of the splitter device (100).

15. Method of assembling a splitter device system (200), comprising:
Providing a splitter device (100) with integrated impedance termination according to any of the preceding claims 1 to 13; and
Connecting a downstream cable (205) of a data bus (201) to the second port (103) of the splitter device (200), and by connecting the downstream cable (205) to the second port (103) activating the actuation mechanism (111) of the impedance termination arrangement (107), switching the splitter device (100) from the first connection state to the second connection stateand disconnecting the termination resistor (109) from the first port (101) and/or the third port (105) by means of the activated actuation mechanism (111).
